# EUROPÄISCHE PATENTSCHRIFT

(11) **EP 3 115 242 B1**
(45) Veröffentlichungstag und Bekanntmachung des Hinweises auf die Patenterteilung: **11.10.2017**
(21) Anmeldenummer: 16001260.5
(22) Anmeldetag: 03.06.2016
(51) Int. Cl.: B60K 11/06, F01P 5/04, F02B 67/06

(54) **LÜFTERANTRIEB FÜR EIN KRAFTFAHRZEUG**
VENTILATOR DRIVE FOR A MOTOR VEHICLE
ENTRAÎNEMENT HYBRIDE POUR UN VEHICULE AUTOMOBILE

(30) Priorität: 04.07.2015 DE 102015008721
(43) Veröffentlichungstag der Anmeldung: 11.01.2017
(73) Patentinhaber: MAN Truck & Bus AG, 80995 München (DE)
(72) Erfinder: Fischer, Helmut, 90763 Fürth (DE); Hofmann, Sebastian, 90459 Nürnberg (DE)
(74) Vertreter: v. Bezold & Partner Patentanwälte - PartG mbB

(56) Entgegenhaltungen:
- EP-A2- 0 884 210
- WO-A1-2012/139224
- DE-A1- 2 318 104
- DE-A1- 10 324 314
- DE-A1- 19 821 097

## Beschreibung

Die Erfindung betrifft eine Vorrichtung zum Antreiben eines Lüfters eines Antriebsaggregats eines Kraftfahrzeugs, insbesondere eines Nutzfahrzeugs, nach dem Oberbegriff des Anspruchs 1, wie aus DE10324314 bekannt ist. Aus der Praxis sind Lüfterantriebe, insbesondere für Nutzfahrzeuge, bekannt, die auf der Kurbelwelle oder einer Verlängerung der Kurbelwelle des Verbrennungsmotors befestigt sind und mit Motordrehzahl angetrieben werden. Weitere Nebenaggregate, wie z. B. eine Kühlmittelpumpe, auch als Wasserpumpe bezeichnet, einen Generator, ein Klimakompressor etc. werden dabei zumeist durch einen Riemenantrieb mit einem Riemen gemeinsam angetrieben. Bei niedriger Motordrehzahl und hoher Belastung des Motors (großes Drehmoment) reicht oft die durch den Lüfter geförderte Kühlluft zur Kühlung des Motors nicht aus. Darüber hinaus liegen bei dieser Ausgestaltung die Drehzahlverhältnisse fest.

In der Offenlegungsschrift EP 0 884 210 A2 wird eine Vorrichtung zum Antreiben von Aggregaten einer Brennkraftmaschine, wie Kühlmittelpumpe und Lüfter, über einen von einer Kurbelwelle aus antreibbaren ersten Riementrieb durch eine mit der Kurbelwelle verbundene erste Riemenscheibe vorgeschlagen. Hierbei steht die erste Riemenscheibe mit einer mit einer Kühlmittelpumpenwelle verbundenen zweiten Riemenscheibe über einen Riemen in einer Antriebsverbindung. Mit der Kühlmittelpumpenwelle ist eine dritte Riemenscheibe verbunden. Die dritte Riemenscheibe bildet mit einer vierten Riemenscheibe, die auf der Kurbelwelle oder einer Verlängerung der Kurbelwelle drehbar gegenüber der Kurbelwelle gelagert ist, einen zweiten Riemenantrieb. Der Lüfter steht mit der vierten Riemenscheibe in Antriebsverbindung. Hierdurch kann eine Übersetzung ins Schnelle für den Lüfterantrieb realisiert werden, erfordert jedoch das Vorsehen einer zusätzlichen Riemenscheibe an der Kühlmittelpumpenwelle, was aufgrund der zusätzlichen Belastungen mit einem erhöhten Risiko von Undichtheiten einhergeht und ferner aus bauraumtechnischen Gründen oft hohe Realisierungsaufwände erfordert. Ein weiterer Nachteil sind die resultierenden zusätzlichen Lagerbelastungen der Nebenaggregate und ggf. die Erfordernis, diese neu auslegen zu müssen.

Die DE 23 18 104 offenbart einen Lüfterantrieb, bei dem der Lüfter über einen in Abhängigkeit von der Motordrehzahl angetriebenen Keilriementrieb und eine Schlupfkupplung angetrieben wird, wobei drehfest mit der Keilriemenscheibe das antreibende Teil der Schlupfkupplung verbunden ist und die Keilriemenscheibe sowie das antreibende Teil der Schlupfkupplung über eine Lagerung relativ verdrehbar und koaxial zu einer Welle vorgesehen sind, auf der das angetriebene Teil der Schlupfkupplung sowie der Lüfter drehschlüssig angelenkt sind. Nachteilig hieran sind wieder die resultierenden zusätzlichen Lagerbelastungen der Nebenaggregate durch die gemeinsame Welle, auch wenn diese drehzahlentkoppelt ist. Ferner ist eine Schlupfkupplung erforderlich.

In der Offenlegungsschrift DE 103 24 314 A1 wird ein Lüfterantrieb vorgeschlagen, der durch einen Verbrennungsmotor eines Kraftfahrzeuges antreibbar ist, mittels einer Flüssigkeitsreibungskupplung und mit Mitteln zur Erhöhung der Lüfterdrehzahl. Hierbei ist der Lüfter koaxial zur Kurbelwelle des Verbrennungsmotors angeordnet. Achsparallel zur Kurbelwelle sind Nebenaggregate vorsehbar, die über einen gemeinsamen ersten Riementrieb mit einer Übersetzung ins Schnelle vom Verbrennungsmotor antreibbar sind. Hierbei ist der Lüfter über einen ersten Antriebsstrang, in den die Flüssigkeitsreibungskupplung, bestehend aus Antriebswelle, Antriebsscheibe und Gehäuse, sowie ein Freilauf geschaltet sind, direkt von der Kurbelwelle und alternativ - zur Erhöhung der Lüfterdrehzahl - über einen zweiten Antriebsstrang antreibbar, der einen zweiten Riementrieb von einem Nebenaggregat auf die Flüssigkeitsreibungskupplung umfasst und über eine Schaltkupplung zu- oder abschaltbar ist. Nachteilig an dieser Lösung ist der komplexe Aufbau und die resultierenden vergleichsweise hohen Bauteilkosten zur Realisierung des Lüfterantriebs, da beispielsweise eine Schlupfkupplung und ein Freilaufelement erforderlich sind.

Es ist somit eine Aufgabe der Erfindung, die aus dem Stand der Technik bekannten Ansätze unter Vermeidung der vorstehend beschriebenen Nachteile weiterzubilden. Es ist insbesondere eine Aufgabe der Erfindung, einen Lüfterantrieb mit einer Übersetzung ins Schnelle bereitzustellen, der kostengünstig, komponentenschonend und mit geringem Bauraumbedarf realisierbar ist.

Diese Aufgaben werden durch Vorrichtungen mit den Merkmalen des unabhängigen Anspruchs gelöst. Vorteilhafte Ausführungsformen und Anwendungen der Erfindung vergeben sich aus den abhängigen Ansprüchen und werden in der folgenden Beschreibung unter teilweiser Bezugnahme auf die Figuren näher erläutert.

Gemäß allgemeinen Gesichtspunkten der Erfindung wird eine Vorrichtung zum Antreiben eines Lüfters eines Antriebsaggregats eines Kraftfahrzeugs, insbesondere eines Nutzfahrzeugs, vorgeschlagen. Die Vorrichtung wird nachfolgend auch als Lüfterantrieb bezeichnet und umfasst eine Lagereinrichtung, über die der Lüfter koaxial zu und drehbar gegenüber der Kurbelwelle eines Verbrennungsmotors des Antriebsaggregats vorsehbar ist sowie einen Riementrieb, über den der Lüfter mit einer Übersetzung ins Schnelle antreibbar ist. Dieser Riementrieb wird nachfolgend als erster Riementrieb bezeichnet. Der erste Riementrieb umfasst eine erste und eine zweite Riemenscheibe, die über einen Riemen, nachfolgend als erster Riemen bezeichnet, in einer Antriebsverbindung stehen. Die erste und/oder die zweite Riemenscheibe können beispielsweise als Keilrippenscheibe ausgeführt sein. Hierbei ist die erste Riemenscheibe auf der ersten Lagereinrichtung angeordnet und drehfest auf dieser gehaltert und somit von der Kurbelwelle drehzahlentkoppelt. Die zweite Riemenscheibe ist zu einer Antriebswelle eines Druckluftverdichters koaxial angeordnet und mit dieser drehzahlgekoppelt. Der Druckluftverdichter wird auch als Luftpresser bezeichnet. Die beiden Begriffe werden in diesem Dokument gleichbedeutend verwendet. Ferner werden auch die Begriffe Riemenantrieb und Riementrieb gleichbedeutend verwendet.

Ein besonderer Vorzug der Erfindung liegt darin, dass die Lagerung des Lüfters über die Lagereinrichtung zur Kurbelwelle drehzahlentkoppelt ist, wodurch zusätzliche Belastungen von Kurbelwelle und Lagerung vermieden werden können. Durch eine entsprechende relative Dimensionierung der ersten und zweite Riemenscheibe kann flexibel eine gewünschte Übersetzung ins Schnelle realisiert werden. Besonders vorteilhaft ist, wenn nur der Lüfter und somit kein weiteres Nebenaggregat, wie beispielsweise die Kühlmittelpumpe oder den Generator, vom ersten Riemen bzw. dem ersten Riementrieb angetrieben werden. Auf diese Weise können zusätzliche Lagerbelastungen der weiteren Nebenaggregate und deren Neuauslegung vermieden werden. Ferner können auf diese Weise Probleme mit Undichtheiten resultierend aus dem zusätzlichen oder geänderten Lüfterantrieb vermieden werden. Ferner weist die erfindungsgemäße Vorrichtung vorzugsweise keine Schlupfkupplung bzw. Schaltkupplung oder Freiläufe auf, so dass auf derartige zusätzliche Komponenten verzichtet werden kann.

Gemäß einer bevorzugten Ausführungsform ist die zweite Riemenscheibe mit der Antriebswelle des Druckluftverdichters über einen mechanischen Durchtrieb gekoppelt. Diese Variante bietet sich insbesondere dann an, wenn eine Lüfterübersetzung ins Schnelle realisiert werden soll, ohne jedoch die Lage des Lüfters oder der anderen Nebenaggregate und deren Antriebe verändern zu müssen, da die bestehende Antriebswelle des Druckuftverdichters "nach vorne" um einen Durchtrieb "verlängert" wird. Gemäß einer besonders bevorzugten Ausführungsform ist der Durchtrieb des Druckluftverdichters als zahnradgetriebener Durchtrieb ausgeführt. Beispielweise kann die Vorrichtung zum Antreiben des Lüfters ein Zahnradgetriebe umfassen, über das der Durchtrieb des Druckluftverdichters in einer Antriebsverbindung mit der Kurbelwelle des Verbrennungsmotors steht.

Der Durchtrieb kann beispielsweise als Klauenkupplung oder Kreuzscheibenkupplung ausgeführt sein. Mit Hilfe einer derartigen Kupplung können die für den Druckluftverdichter charakteristischen Vibrationen und Stöße in axialer und radialer Richtung an der angeschlossenen Riemenscheibe minimiert werden unter Erhaltung des zu übertragenden Drehmoments und der Drehzahl. Denkbar sind jedoch auch neben einer Klauenkupplung oder Kreuzscheibenkupplung weitere Ausführungsformen von Wellenkupplungen, insbesondere Zahnkupplungen, Kreuzgelenke oder Ausgleichskupplungen. In einer weiteren Ausführungsform kann die zweite Riemenscheibe direkt auf die Welle des Druckluftverdichters mittels kraft-, form- oder stoffschlüssigen Welle-Nabe-Verbindungen aufgebracht werden.

Zur Ausbildung des zahnradgetriebenen Durchtriebs kann ein Mitnehmerelement vorgesehen sein, das ein auf der Antriebswelle des Drückluftverdichters sitzendes Zahnrad, nachfolgend als Luftpresserzahnrad bezeichnet, mit einer Welle oder Nabe drehzahlgekoppelt verbindet, wobei die zweite Riemenscheibe auf dieser Welle oder Nabe drehfest gehaltert ist. Hierbei kann das Luftpresserzahnrad auf einer dem Druckluftverdichter zugewandten Seite des Mitnehmerelements mit dem Mitnehmerelement formschlüssig verbunden sein. Ferner kann die Welle oder Nabe auf einer dem Druckluftverdichter abgewandten Seite des Mitnehmerelements mit dem Mitnehmerelement formschlüssig verbunden sein. Das Mitnehmerelement kann als Mitnehmerscheibe, insbesondere als Kreuzscheibe, ausgeführt sein, wobei an radialen Flanken der Mitnehmerscheibe sich in Axialrichtung erstreckende Klauen oder Naben sowohl des Luftpresserzahnrads als auch der Nabe oder Welle angreifen. Dies ermöglicht eine baulich kompakte und kostengünstige Drehmomentübertragung auf die zweite Riemenscheibe.

Vorstehend wurde bereits erwähnt, dass der Durchtrieb als zahnradgetriebener Durchtrieb ausgeführt sein kann. Bei einer vorteilhaften Variante dieser Ausgestaltungsform ist ein Zahnradgetriebe zum Antrieb der Antriebswelle und des Durchtriebs des Druckluftverdichters vorgesehen, aufweisend ein auf der Antriebswelle des Druckluftverdichters sitzendes Luftpresserzahnrad, ein Zwischenrad und ein auf der Kurbelwelle des Verbrennungsmotors sitzendes Kurbelwellenrad, wobei das Luftpresserrad mit dem Zwischenrad kämmt und das Zwischenrad mit dem Kurbelwellenrad kämmt.

In einer weiteren vorteilhaften Ausführungsform kann das Zahnradgetriebe ein auf der Antriebswelle des Druckluftverdichters sitzendes Luftpresserrad und ein auf der Kurbelwelle des Verbrennungsmotors sitzendes Kurbelwellenrad aufweisen, wobei sich beide Räder über eine Verzahnung im Eingriff befinden.

Gemäß einer weiteren besonders bevorzugten Ausgestaltungsform ist die zweite Riemenscheibe als Doppelriemenscheibe ausgeführt, wobei die Doppelriemenscheibe eine erste Riemenspur, auf der der erste Riemen angreift, und eine zweite Riemenspur, auf der ein zweiter Riemen eines zweiten Riementriebs angreift, aufweist. Über den zweiten Riementrieb wird eine Kühlmittelpumpe und/oder ein Generator, insbesondere die Lichtmaschine, angetrieben.

Ein besonderer Vorzug dieser Ausführungsvariante liegt darin, dass dadurch ein laufruhiger und geräuscharmer Betrieb des Lüfterantriebs ermöglicht wird. Bei einem Hubkolben-Druckluftverdichter erzeugen die Stöße bzw. die Hin- und Herbewegungen der Kolben ein hörbares Klacken des an der Antriebswelle des Druckluftverdichters angreifenden Zahnradantriebs aufgrund des Zahnradspiels. Ist jedoch das Zahnrad des Luftpressers und Luftpresserdurchtriebes treibendes Element über die Doppelkeilrippenriemenscheibe zum ersten Riementrieb des Lüfters und zum zweiten Riementrieb der Kühlmittelpumpe und/oder des Generators (Lichtmaschine), dann verhindern diese Kräfte ein Zurückspringen des Luftpresserzahnrades und sorgen dadurch für einen deutlich laufruhigeren Motorbetrieb.

Eine weitere Möglichkeit der erfindungsgemäßen Realisierung sieht vor, dass die Lagereinrichtung zur Halterung der ersten Riemenscheibe ein Lagergehäuse aufweist, das auf einem integrierten Wellenlager gelagert ist, wobei die erste Riemenscheibe mittels dem integrierten Wellenlager relativ drehbar auf der Kurbelwelle gelagert ist. Ein integriertes Wellenlager weist eine Welle auf, die über mehrere Wälzkörperreihen in einem durchgehärteten Außenring gelagert ist. Mit anderen Worten hat ein solches integriertes Wellenlager keinen Innenring, sondern weist direkt in die Welle eingearbeitete Laufbahnen auf. Dadurch ergibt sich mehr Bauraum für die Wälzkörper, wodurch die Tragfähigkeit höher ist als bei Lösungen mit herkömmlichen Einzellagern. Integrierte Wellenlager sind an sich aus dem Stand der Technik bekannt und werden vorwiegend in Kühlmittelpumpen von Kraftfahrzeugen eingesetzt und daher auch als Wasserpumpenlager bezeichnet.

Statt eines integrierten Wellenlagers können alternativ ein herkömmliches Wälzlager, Gleitlager, und/oder Doppelrollenlager verwendet werden bzw. zwei herkömmliche Einzellager und eine separate Welle.

Ferner kann die Lagereinrichtung einen Anschlussflansch aufweisen, so dass der Lüfter über eine Flanschverbindung mit der Lagereinrichtung verbunden werden kann. Die Antriebswelle des Druckluftverdichters ist vorzugsweise achsparallel zur Kurbelwelle des Verbrennungsmotors bzw. zum Lüfter angeordnet.

Gemäß einem weiteren Gesichtspunkt der Erfindung wird ein Kraftfahrzeug, insbesondere ein Nutzfahrzeug, bereitgestellt, mit einer Vorrichtung zum Antreiben eines Lüfters eines Antriebsaggregats eines Kraftfahrzeugs, wie in diesem Dokument offenbart.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Frontansicht eines Lüfterantriebs gemäß einer Ausführungsform der Erfindung;
- Figur 2: einen Längsschnitt entlang der Kurbelwellenachse und Lüfterachse aus Figur 1;
- Figur 3: einen Längsschnitt entlang der Luftpresserachse aus Figur 1;
- Figur 4A: eine perspektivische Darstellung des Luftpresserzahnrads; und
- Figur 4B: eine perspektivische Darstellung der Riemenantriebswelle.

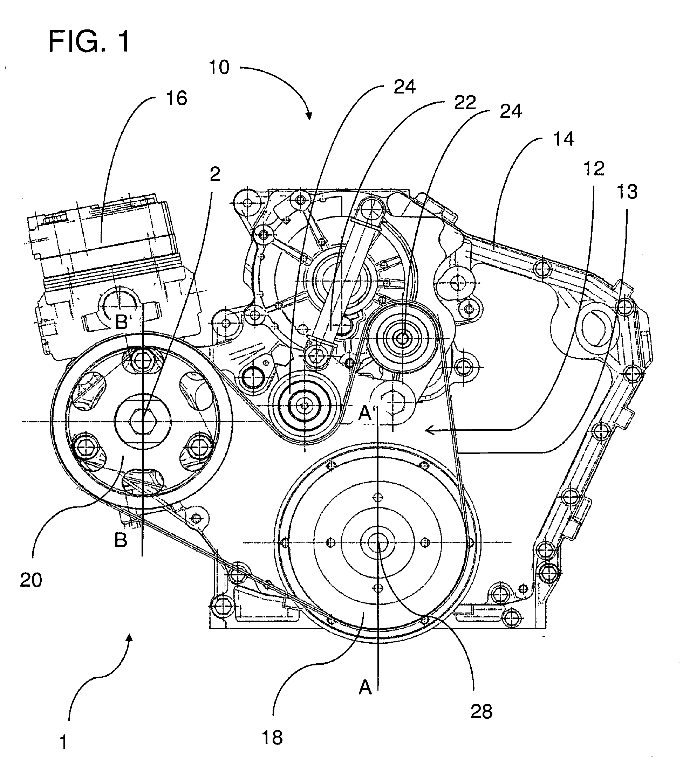

In Figur 1 ist eine frontale Ansicht eines Lüfterantriebs 1 für ein Nutzfahrzeug gezeigt. Der Lüfterantrieb umfasst eine in Figur 1 nicht sichtbare Lagereinrichtung, über die der Lüfter (in Figur 1 ebenfalls nicht dargestellt) koaxial zu und drehbar gegenüber der Kurbelwelle eines Verbrennungsmotors des Antriebsaggregats 10 vorsehbar ist. Mit dem Bezugszeichen 28 ist die Mittelachse der Kurbelwelle (Kurbelwellenachse) des Verbrennungsmotors, von dem in Figur 1 nur dessen Gehäuse 14 sichtbar ist, gekennzeichnet. Dies entspricht auch der Lage der Lüfterachse. Der Lüfterantrieb umfasst ferner einen Riementrieb 12 ("erster Riementrieb"), über den der Lüfter mit einer Übersetzung ins Schnelle antreibbar ist, aufweisend eine erste Riemenscheibe 18 und eine zweite Riemenscheibe 20, die über einen ersten Riemen 13 in einer Antriebsverbindung stehen, wobei die erste Riemenscheibe 18 auf der Lagereinrichtung angeordnet ist. Die zweite Riemenscheibe 20 ist zu einer Antriebswelle eines Druckluftverdichters 16 koaxial angeordnet und mit dieser drehzahlgekoppelt. Der Druckluftverdichter ist vorliegend als ein nach dem Hubkolbenprinzip arbeitender Druckluftverdichter ausgeführt. Mit dem Bezugszeichen 2 ist die Achse des Druckluftverdichters gekennzeichnet, d. h. vorliegend die Mittelachse der Kurbelwelle des Druckluftverdichters. Die Riemenscheiben 18, 20 sind Keilrippenriemenscheiben.

Der Riemenantrieb 12 umfasst ferner einen Riemenspanner 22, sowie zwei Umlenkrollen 24. In der dargestellten Ausführungsform treibt die zweite Riemenscheibe 20 über den Riemen 13 die erste Riemenscheibe 18 an, über die wiederum der nicht dargestellte Lüfter angetrieben wird. Aus Figur 1 ist ersichtlich, dass mittels einer Radiusänderung von der zweiten, antreibenden Riemenscheibe 20 hin zu der ersten, angetriebenen Riemenscheibe 18 eine Vielzahl an Übersetzungsmöglichkeiten sowohl ins Schnelle als auch ins Langsame realisiert werden können, wobei vorliegend eine Übersetzung ins Schnelle realisiert ist. Selbst bei einem bestehenden Antriebsaggregat 10 kann durch einen Austausch der ersten und/oder der zweiten Riemenscheibe eine neue Übersetzung realisiert werden, ohne dass weitere Änderungen am Antriebsaggregat 10 vorgenommen werden müssen. Dies ist auch ein entscheidender Vorteil des gezeigten Riemenantriebs 12 gegenüber eines Zahnradantriebs, da bei letzterem eine Übersetzungsänderung in der Regel mit einem veränderten Teilkreisverhältnis und einem veränderten Abstand der Zahnradachsen zueinander einhergeht.

In Figur 1 ist erkennbar, dass der erste Riemen 13 nur den Lüfter über das erste Riemenrad 18 antreibt. Der erste Riementrieb 12 bzw. der erste Riemen 13 treibt insbesondere nicht den Generator, die Kühlmittelpumpe oder ein anderes Nebenaggregat an. Der Druckluftverdichter wird über einen Zahnradantrieb im Steuergehäuse angetrieben und nicht über den ersten Riementrieb 12.

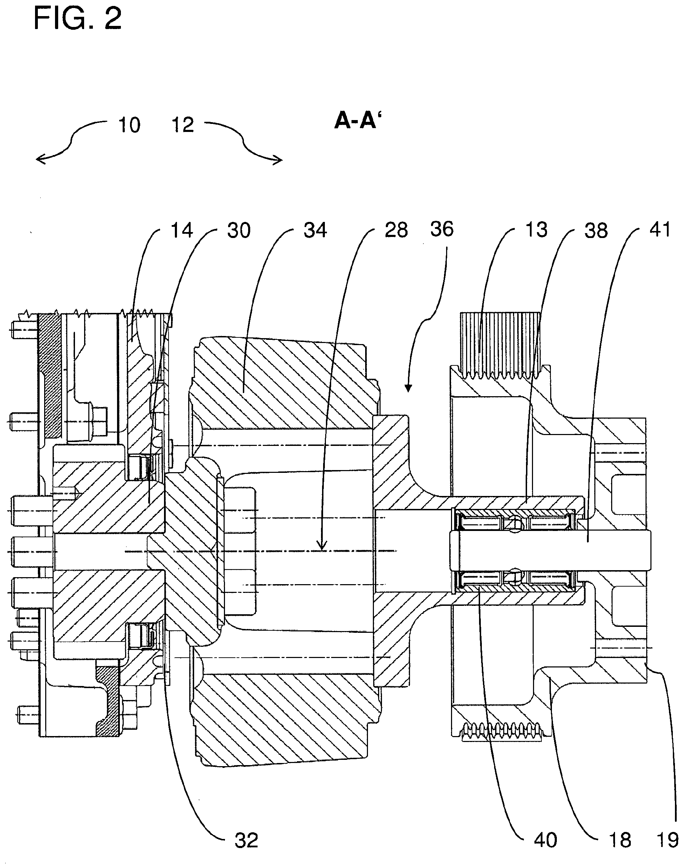

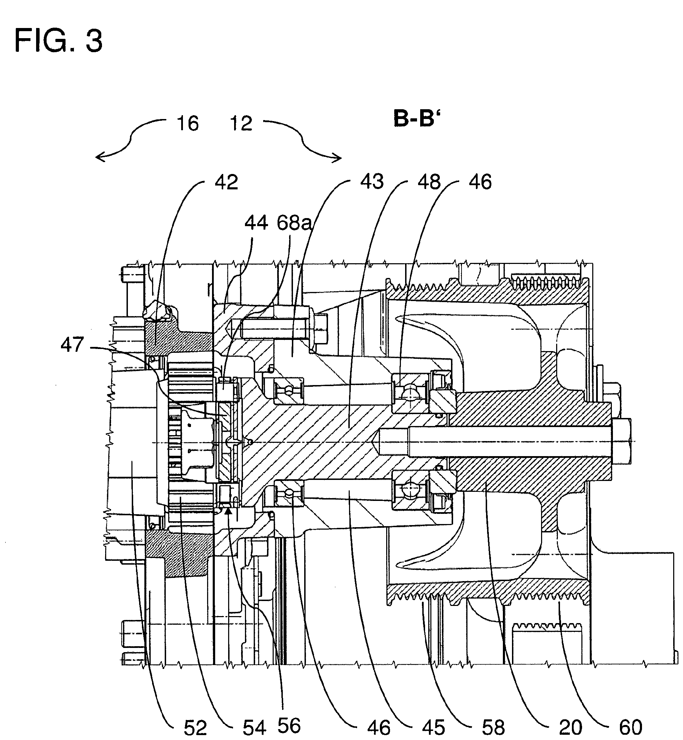

Figur 2 verdeutlicht die Lagerung der ersten Riemenscheibe 18 anhand eines Längsschnitts A-A' entlang der Kurbelwellenachse 28. Die motorseitig angeordnete, nicht dargestellte Kurbelwelle weist in der dargestellten Ausführungsform ein starr und konzentrisch mit der Kurbelwelle verbundenes Kurbelwellenrad 30 auf, das zur Kopplung von außerhalb des Motorgehäuses 14 liegenden Abnehmern dient. In der gezeigten Ausführungsform ist das Kurbelwellenrad 30 innerhalb des Antriebaggregats 10 ausgebildet und über eine Kurbelwellendichtung 32 zur Umgebung abgedichtet. Das Kurbelwellenrad 30 kämmt mit einem Zwischenrad, das wiederum mit einem Luftpresserrad kämmt (in Figur 2 jeweils nicht dargestellt), was nachfolgend noch in Zusammenhang mit Figur 3 näher erläutert wird.

In axialer Richtung versetzt vom Kurbelwellenrad 30 ist in an sich bekannter Weise ein Schwingungsdämpfer 34 vorgesehen und an dem Kurbelwellenrad 30 befestigt. Nach dem Schwindungsdämpfer 34 ist eine Lagereinrichtung 36 vorgesehen, über die die erste Riemenscheibe 18 koaxial zu und drehbar gegenüber der Kurbelwelle des Verbrennungsmotors gelagert ist. Mit dem Bezugszeichen 28 ist die Lage der Kurbelwellenachse gekennzeichnet. Die Lagereinrichtung 36 umfasst eine Lagerhülse bzw. ein Lagergehäuse 38 sowie ein integriertes Wellenlager 40 als Wälzlager. In einer anderen, nicht abgebildeten Ausführungsform ist das Wälzlager zur Lagerung der innenliegenden Welle 41 als angestellte Lagerung ausgeführt, insbesondere als O-Anordnung. Denkbar sind jedoch auch weitere Wälzlageranordnungen, beispielsweise Fest-Los-Lagerungen und die Verwendung eines Gleitlagers anstelle von Wälzlagern. Die erste Riemenscheibe 18 ist mit der innenliegenden Welle 41 der Lagereinrichtung 36 starr verbunden, beispielsweise mittels einer kraftschlüssigen Welle-Nabe-Verbindung, z. B mittels eines Zylinderpressverbands. Anhand dieser Anordnung wird eine zur Kurbelwelle koaxiale und drehzahlentkoppelte Lagerung der ersten Riemenscheibe 18 erzeugt. In der gezeigten Ausführungsform weist die erste Riemenscheibe 18 zusätzlich einen Anschlussflansch 19 auf, mit Hilfe dessen der nicht dargestellte Lüfter koaxial und drehfest verbunden werden kann.

Figur 3 zeigt einen Längsschnitt entlang der Schnittebene B-B' gemäß Figur 1 zur Illustration des zahnradgetriebenen Durchtriebs des Luftpressers 16 und der daran angekoppelten zweiten Riemenschiebe 20. Gezeigt ist ein Ausschnitt aus dem Steuergehäuse 42, sowie ein Steuergehäusedeckel 44. In einer Aussparung des Steuergehäuses 42 befindet sich ein auf der Antriebswelle des Druckluftverdichters sitzendes Luftpresserzahnrad 54, das zur Ausbildung eines Zahnradantriebes über ein Zwischenrad mit dem Kurbelwellenzahnrad in einer Antriebsverbindung steht.

Im gezeigten Fall erfüllt der Zahnradantrieb zwei Funktionen. In seiner ersten Funktion treibt der Zahnradantrieb die Luftpresserwelle 52 über das starr mit der Luftpresserwelle 52 verbundene Luftpresserrad 54 an und ermöglicht damit den Betrieb des Druckluftverdichters 16. In seiner zweiten Funktion treibt der Zahnradantrieb über einen mechanischen Durchtrieb 56 die zweite Riemenscheibe 20 und damit den Riemenantrieb 12 an. In der gezeigten Ausführungsform ist der mechanische Durchtrieb 56 als Kreuzscheibenkupplung ausgeführt.

Hierzu ist ein Mitnehmerelement in Form einer Kreuzscheibe 47 vorgesehen, das das Luftpresserzahnrad 54 mit einer Riemenantriebswelle 48 drehzahlgekoppelt verbindet, wobei die zweite Riemenscheibe 20 auf der Riemenantriebswelle 48 drehfest gehaltert ist.

Zur Ausbildung des Durchtriebs weist das Luftpresserzahnrad 54 vorspringende Profilteile in Form in Richtung der Kreuzscheibe 47 axial abstehenden Klauen 68a auf, die in entsprechende Ausnehmungen der Kreuzscheibe eingreifen. Analog weist die Welle oder Nabe 48 axiale Klauen 68b auf, die in entsprechende Ausnehmungen der Kreuzscheibe 47 eingreifen.

Die Lagerung 45 der Riemenantriebswelle 48 wird von einem Lagergehäuse 43 umhaust. In der gezeigten Ausführungsform besteht die Lagerung 45 der Riemenantriebswelle 48 aus zwei Wälzlagern 46 in einer angestellten Lageranordnung, insbesondere einer O-Anordnung. Möglich sind auch andere Lagerkonzepte, beispielsweise Fest-Los-Lagerungen oder eine schwimmende Lagerung der Riemenantriebswelle 48. Das Lagergehäuse 43 ist mit einer Schraubverbindung am Steuergehäusedeckel 44 befestigt. Die zweite Riemenscheibe 20 ist drehfest mit der Riemenantriebswelle 48 verbunden.

In der gezeigten Ausführungsform ist die zweite Riemenscheibe 20 als Doppelkeilrippenriemenscheibe ausgebildet mit einer ersten Riemenspur 58 und einer zweiten Riemenspur 60. Die erste Riemenspur 58 dient zum Antrieb des nicht abgebildeten Haupttriebs, über den eine Kühlmittelpumpe und ein Generator (Lichtmaschine) angetrieben werden. Die zweite Riemenspur 60 dient zum Antrieb des ersten Riementriebs 12 und damit des Lüfters.

Die Kopplung des Druckluftverdichters 16 mit dem Haupttrieb über die erste Riemenspur 58 und den mechanischen Durchtrieb 56 hat den bedeutenden Vorteil, dass der durch den Haupttrieb auf die Riemenantriebswelle 48 induzierte Widerstand eine dämpfende Wirkung auf die Schwingungs- und Vibrationscharakteristik des Zahnradtriebes hat.

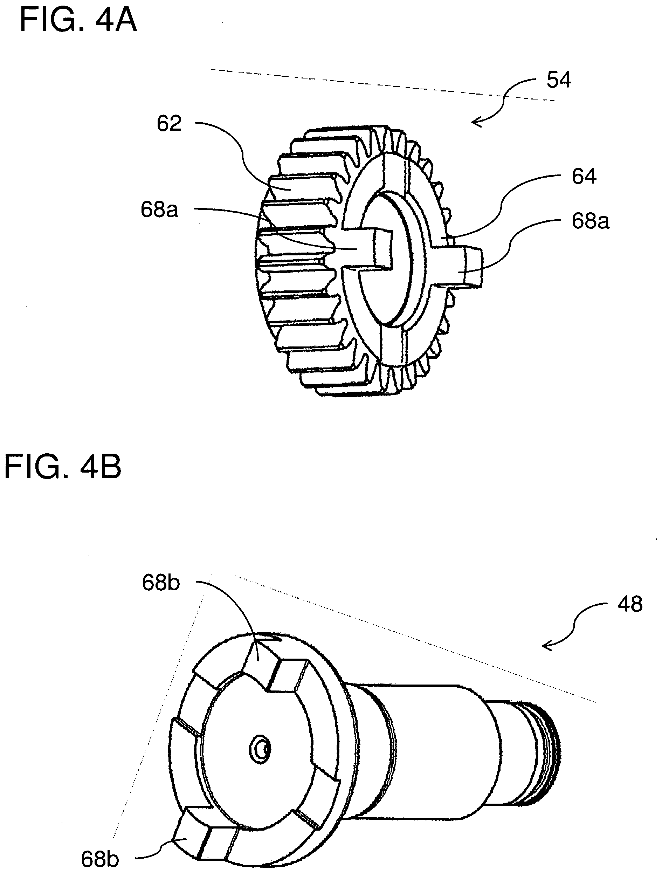

In Figur 4A ist das Luftpresserrad 54 dargestellt, welches auf die in Figur 4A und 4B nicht dargestellte Luftpresserwelle 52 montiert ist, und über eine Verzahnung 62 von einem weiteren, nicht dargestellten Zwischenrad angetrieben wird, welches wiederum in Wirkverbindung mit dem Kurbelwellenrad und damit mit der Kurbelwelle des Verbrennungsmotors steht. Neben der Krafteinleitung in die nicht dargestellte Luftpresserwelle ermöglicht das Luftpresserrad mittels eines Mitnehmerprofils 64 die Ausbildung eines Durchtriebs zum Antrieb der zweiten Riemenscheibe 20.

Hierbei greifen die Klauen 68a des Mitnehmerprofils 64 in entsprechende Ausnehmungen einer Kreuzscheibe ein, die zwischen dem Luftpresserrad 54 und der Riemenantriebswelle 48 angeordnet ist. Die Kreuzscheibe 47 ist in den Figuren 4A und 4B nicht dargestellt, jedoch in Figur 3 erkennbar.

Figur 4B zeigt eine perspektivische Darstellung der Riemenantriebswelle 48. Der der Kreuzscheibe zugewandte Endbereich der Riemenantriebswelle 48 weist ebenfalls sich in axialer Richtung erstreckende Klauen 68b auf, die in entsprechende Ausnehmungen der Kreuzscheibe eingreifen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Lüfterantrieb
- 2: Luftpresserachse
- 10: Antriebsaggregat
- 12: Riemenantrieb
- 13: Riemen
- 14: Motorgehäuse
- 16: Druckluftverdichter
- 18: Erste Riemenscheibe
- 19: Anschlussflansch
- 20: Zweite Riemenscheibe
- 22: Riemenspanner
- 24: Umlenkrolle
- 28: Kurbelwellenachse
- 30: Kurbelwellenrad
- 32: Kurbelwellendichtung
- 34: Schwingungsdämpfer
- 36: Lagereinrichtung
- 38: Lagerhülse
- 40: Integriertes Wellenlager
- 41: Innenliegende Welle
- 42: Steuergehäuse
- 43: Lagergehäuse
- 44: Steuergehäusedeckel
- 45: Lagerung
- 46: Wälzlager
- 47: Kreuzscheibe
- 48: Riemenantriebswelle
- 52: Luftpresserwelle
- 54: Luftpresserrad
- 56: Durchtrieb
- 58: Erste Riemenspur
- 60: Zweite Riemenspur
- 62: Verzahnung
- 64: Mitnehmerprofil
- 68a, 68b: Vorspringende Profilteile

## Patentansprüche

1. Vorrichtung zum Antreiben eines Lüfters eines Antriebsaggregats (10) eines Kraftfahrzeugs, insbesondere eines Nutzfahrzeugs, umfassend
eine Lagereinrichtung (36), über die der Lüfter koaxial zu und drehbar gegenüber der Kurbelwelle eines Verbrennungsmotors des Antriebsaggregats (10) vorsehbar ist; und
einen ersten Riementrieb (12), über den der Lüfter mit einer Übersetzung ins Schnelle antreibbar ist, aufweisend eine erste Riemenscheibe (18) und eine zweite Riemenscheibe (20), die über einen ersten Riemen (13) in einer Antriebsverbindung stehen, wobei die erste Riemenscheibe (18) auf der Lagereinrichtung (36) angeordnet ist,
**dadurch gekennzeichnet,**
**dass** die zweite Riemenscheibe (20) zu einer Antriebswelle eines Druckluftverdichters (16) koaxial angeordnet und mit dieser drehzahlgekoppelt ist.

2. Vorrichtung nach Anspruch 1, **gekennzeichnet durch** einen mechanischen Durchtrieb (56) des Druckluftverdichters (16), über den die zweite Riemenscheibe (20) mit der Antriebswelle des Druckluftverdichters (16) drehzahlgekoppelt ist.

3. Vorrichtung nach Anspruch 2, **dadurch gekennzeichnet,**
(a) **dass** der Durchtrieb als zahnradgetriebener Durchtrieb ausgeführt ist; und/oder
(b) **dass** die Vorrichtung ein Zahnradgetriebe umfasst, über das der Durchtrieb (56) des Druckluftverdichters (16) in einer Antriebsverbindung mit der Kurbelwelle des Verbrennungsmotors steht.

4. Vorrichtung nach Anspruch 2 oder 3, **dadurch gekennzeichnet,**
(a) **dass** der Durchtrieb (56) als Klauenkupplung oder Kreuzscheibenkupplung ausgeführt ist; und/oder
(b) **dass** zur Ausbildung des zahnradgetriebenen Durchtriebs ein Mitnehmerelement vorgesehen ist, das ein auf der Antriebswelle (52) des Druckluftverdichters (16) sitzendes Luftpresserzahnrad (54) mit einer Welle (48) oder Nabe drehzahlgekoppelt verbindet, wobei das Luftpresserzahnrad (54) auf einer dem Druckluftverdichter (16) zugewandten Seite des Mitnehmerelements mit dem Mitnehmerelement formschlüssig verbunden ist und die Welle (48) oder Nabe auf einer dem Druckluftverdichter (16) abgewandten Seite des Mitnehmerelements mit dem Mitnehmerelement formschlüssig verbunden ist, wobei die zweite Riemenscheibe (20) auf der Welle (48) oder Nabe drehfest gehaltert ist.

5. Vorrichtung nach Anspruch 4, **dadurch gekennzeichnet, dass** das Mitnehmerelement als Mitnehmerscheibe (47), insbesondere als Kreuzscheibe, ausgeführt ist, wobei an radialen Flanken der Mitnehmerscheibe (47) sich in Axialrichtung erstreckende Klauen (68a, 68b) sowohl des Luftpresserzahnrads (54) als auch der Nabe oder Welle (48) angreifen.

6. Vorrichtung nach einem der Ansprüche 3 bis 5, **gekennzeichnet durch** ein Zahnradgetriebe zum Antrieb der Antriebswelle und des Durchtriebs des Druckluftverdichters, aufweisend ein auf der Antriebswelle des Druckluftverdichters sitzendes Luftpresserzahnrad (54), ein Zwischenrad und ein auf der Kurbelwelle des Verbrennungsmotors sitzendes Kurbelwellenrad (30), wobei das Luftpresserrad (54) mit dem Zwischenrad kämmt und das Zwischenrad mit dem Kurbelwellenrad (30) kämmt.

7. Vorrichtung nach einem der vorhergehenden Ansprüche, **dadurch gekennzeichnet, dass** die zweite Riemenscheibe (20) als Doppelriemenscheibe ausgeführt ist, aufweisend eine ersten Riemenspur (58), auf der der erste Riemen (13) angreift, und eine zweite Riemenspur (60), auf der ein zweiter Riemen eines zweiten Riementriebs angreift, wobei über den zweiten Riementrieb eine Wasserpumpe und/oder ein Generator, insbesondere die Lichtmaschine, angetrieben werden.

8. Vorrichtung nach einem der vorhergehenden Ansprüche, **dadurch gekennzeichnet, dass** die Lagereinrichtung (36) ein Lagergehäuse (38) aufweist, das auf einem integrierten Wellenlager (40) gelagert ist, wobei die erste Riemenscheibe (18) mittels dem integrierten Wellenlager (40) relativ drehbar auf der Kurbelwelle gelagert ist.

9. Vorrichtung nach einem der vorhergehenden Ansprüche, **dadurch gekennzeichnet, dass** die Lagereinrichtung (36) einen Anschlussflansch (19) aufweist, so dass der Lüfter über eine Flanschverbindung mit der Lagereinrichtung (36) verbunden werden kann.

10. Vorrichtung nach einem der vorhergehenden Ansprüche, **dadurch gekennzeichnet,**
(a) **dass** die erste und/oder zweite Riemenscheibe als Keilrippenriemenscheibe ausgeführt ist; und/oder
(b) **dass** die Antriebswelle (52) des Druckluftverdichters (16) achsparallel zur Kurbelwelle des Verbrennungsmotors bzw. zum Lüfter angeordnet ist.

11. Vorrichtung nach einem der vorhergehenden Ansprüche, **dadurch gekennzeichnet, dass** neben dem Lüfter kein weiteres Nebenaggregat in einer Antriebsverbindung mit dem ersten Riemen steht.

12. Kraftfahrzeug, insbesondere Nutzfahrzeug, mit einer Vorrichtung nach einem der vorhergehenden Ansprüche.

## Claims

1. Device for driving a fan of a drive unit (10) of a motor vehicle, in particular a commercial vehicle, comprising
a bearing arrangement (36), by means of which the fan can be provided coaxially with and so as to be rotatable relative to the crankshaft of an internal combustion engine of the drive unit (10); and
a first belt transmission (12), by means of which the fan can be driven with a speed-increasing ratio, having a first belt pulley (18) and a second belt pulley (20), which are in a drive connection via a first belt (13), wherein the first belt pulley (18) is arranged on the bearing arrangement (36),
**characterized**
**in that** the second belt pulley (20) is arranged coaxially with a drive shaft of a compressed-air compressor (16) and is coupled therewith in respect of speed.

2. Device according to Claim 1, **characterized by** a mechanical through drive (56) of the compressed-air compressor (16), by means of which through drive the second belt pulley (20) is coupled to the drive shaft of the compressed-air compressor (16) in respect of speed.

3. Device according to Claim 2, **characterized** (a) in that the through drive is embodied as a gearwheel-driven through drive; and/or (b) in that the device comprises a gearwheel mechanism, by means of which the through drive (56) of the compressed-air compressor (16) is in a drive connection with the crankshaft of the internal combustion engine.

4. Device according to Claim 2 or 3, **characterized**
(a) **in that** the through drive (56) is embodied as a dog coupling or an Oldham coupling; and/or
(b) **in that**, to form the gearwheel-driven through drive, a driver element is provided, which connects an air compressor gearwheel (54) seated on the drive shaft (52) of the compressed-air compressor (16) to a shaft (48) or hub in respect of speed, wherein the air compressor gearwheel (54) is connected positively to the driver element on a side of the driver element facing the compressed-air compressor (16), and the shaft (48) or hub is connected positively to the driver element on a side of the driver element facing away from the compressed-air compressor (16), wherein the second belt pulley (20) is held for conjoint rotation on the shaft (48) or hub.

5. Device according to Claim 4, **characterized in that** the driver element is embodied as a driver disc (47), in particular as an Oldham coupling disc, wherein dogs (68a, 68b) extending in the axial direction both on the air compressor gearwheel (54) and on the hub or shaft (48) engage on radial flanks of the driver disc (47).

6. Device according to one of Claims 3 to 5, **characterized by** a gearwheel mechanism for driving the drive shaft and the through drive of the compressed-air compressor, having an air compressor gearwheel (54) seated on the drive shaft of the compressed-air compressor, an intermediate gearwheel and a crankshaft wheel (30) seated on the crankshaft of the internal combustion engine, wherein the air compressor wheel (54) meshes with the intermediate wheel and the intermediate wheel meshes with the crankshaft wheel (30).

7. Device according to one of the preceding claims, **characterized in that** the second belt pulley (20) is embodied as a double belt pulley, having a first belt track (58), on which the first belt (13) engages, and a second belt track (60), on which a second belt of a second belt transmission engages, wherein a water pump and/or a generator, in particular the alternator, are/is driven by means of the second belt transmission.

8. Device according to one of the preceding claims, **characterized in that** the bearing arrangement (36) has a bearing housing (38), which is mounted on an integrated shaft bearing (40), wherein the first belt pulley (18) is mounted on the crankshaft by means of the integrated shaft bearing (40) in such a way as to be capable of relative rotation.

9. Device according to one of the preceding claims, **characterized in that** the bearing arrangement (36) has a connection flange (19), with the result that the fan can be connected to the bearing arrangement (36) by means of a flange connection.

10. Device according to one of the preceding claims, **characterized**
(a) **in that** the first and/or second belt pulley are/is embodied as a ribbed V belt pulley; and/or
(b) **in that** the drive shaft (52) of the compressed-air compressor (16) is arranged axially parallel to the crankshaft of the internal combustion engine or to the fan.

11. Device according to one of the preceding claims, **characterized in that** no other auxiliary unit apart from the fan is in a drive connection with the first belt.

12. Motor vehicle, in particular a commercial vehicle, having a device according to one of the preceding claims.

## Revendications

1. Dispositif pour l'entraînement d'un ventilateur d'un groupe d'entraînement (10) d'un véhicule automobile, en particulier d'un véhicule utilitaire, comprenant
un dispositif de palier (36) par le biais duquel le ventilateur peut être prévu de manière coaxiale et rotative par rapport au vilebrequin d'un moteur à combustion interne du groupe d'entraînement (10), et
un premier entraînement à courroie (12) par le biais duquel le ventilateur peut être entraîné avec un rapport de vitesse surmultipliée, présentant une première poulie (18) et une deuxième poulie (20) qui sont en liaison d'entraînement par le biais d'une première courroie (13), la première poulie (18) étant disposée sur le dispositif de palier (36), **caractérisé en ce que**
la deuxième poulie (20) est disposée coaxialement à un arbre d'entraînement d'un compresseur d'air comprimé (16) et est accouplée en termes de vitesse de rotation avec celui-ci.

2. Dispositif selon la revendication 1, **caractérisé par** une prise directe mécanique (56) de compresseur à air comprimé (16), par le biais de laquelle la deuxième poulie (20) est accouplée en termes de vitesse de rotation avec l'arbre d'entraînement du compresseur d'air comprimé (16).

3. Dispositif selon la revendication 2, **caractérisé en ce que**
(a) la prise directe est réalisée sous forme de prise directe à entraînement par engrenages ; et/ou
(b) le dispositif comprend un entraînement par engrenages par le biais duquel la prise directe (56) du compresseur à air comprimé (16) est en liaison d'entraînement avec le vilebrequin du moteur à combustion interne.

4. Dispositif selon la revendication 2 ou 3, **caractérisé en ce que**
(a) la prise directe (56) est réalisée sous forme d'accouplement à griffes ou d'accouplement à disques croisés ; et/ou
(b) pour la réalisation de la prise directe à entraînement par engrenages, un élément d'entraînement est prévu, lequel relie une roue dentée de compresseur d'air (54) située sur l'arbre d'entraînement (52) du compresseur à air comprimé (16) à un arbre (48) ou un moyeu par accouplement en termes de vitesse de rotation, la roue dentée du compresseur d'air (54) étant en liaison par correspondance de formes avec l'élément d'entraînement sur un côté de l'élément d'entraînement tourné vers le compresseur à air comprimé (16) et l'arbre (48) ou le moyeu étant en liaison par correspondance de formes avec l'élément d'entraînement sur un côté de l'élément d'entraînement opposé au compresseur à air comprimé (16), la deuxième poulie (20) étant retenue de manière solidaire en rotation sur l'arbre (48) ou le moyeu.

5. Dispositif selon la revendication 4, **caractérisé en ce que** l'élément d'entraînement est réalisé sous forme de disque d'entraînement (47), en particulier sous forme de disque croisé, des griffes (68a, 68b) de la roue dentée du compresseur d'air (54) ainsi que du moyeu ou de l'arbre (48), s'étendant dans la direction axiale, s'engageant au niveau de flancs radiaux du disque d'entraînement (47).

6. Dispositif selon l'une quelconque des revendications 3 à 5, **caractérisé par** une transmission à roue dentée pour l'entraînement de l'arbre d'entraînement et de la prise directe du compresseur à air comprimé, présentant une roue dentée de compresseur d'air (54) située sur l'arbre d'entraînement du compresseur à air comprimé, une roue intermédiaire et une roue de vilebrequin (30) située sur le vilebrequin du moteur à combustion interne, la roue de compresseur d'air (54) s'engrenant avec la roue intermédiaire et la roue intermédiaire s'engrenant avec la roue de vilebrequin (30).

7. Dispositif selon l'une quelconque des revendications précédentes, **caractérisé en ce que** la deuxième poulie (20) est réalisée sous forme de poulie double, présentant une première voie de courroie (58) sur laquelle s'engage la première courroie (13) et une deuxième voie de courroie (60) sur laquelle s'engage une deuxième courroie d'un deuxième entraînement à courroie, une pompe à eau et/ou un générateur, en particulier l'alternateur, étant entraînés par le biais du deuxième entraînement à courroie.

8. Dispositif selon l'une quelconque des revendications précédentes, **caractérisé en ce que** le dispositif de palier (36) présente un logement de palier (38) qui est supporté sur un palier d'arbre intégré (40), la première poulie (18) étant supportée au moyen du palier d'arbre intégré (40) de manière relativement rotative sur le vilebrequin.

9. Dispositif selon l'une quelconque des revendications précédentes, **caractérisé en ce que** le dispositif de palier (36) présente une bride de raccordement (19) de telle sorte que le ventilateur puisse être connecté par le biais d'une connexion à bride au dispositif de palier (36).

10. Dispositif selon l'une quelconque des revendications précédentes, **caractérisé en ce que**
(a) la première et/ou la deuxième poulie sont réalisées sous forme de poulie à courroie à nervure en V ; et/ou
(b) l'arbre d'entraînement (52) du compresseur à air comprimé (16) est disposé avec son axe parallèle au vilebrequin du moteur à combustion interne ou au ventilateur.

11. Dispositif selon l'une quelconque des revendications précédentes, **caractérisé en ce qu'**aucun autre groupe auxiliaire en plus du ventilateur n'est en liaison d'entraînement avec la première courroie.

12. Véhicule automobile, en particulier véhicule utilitaire comprenant un dispositif selon l'une quelconque des revendications précédentes.
